Europäisches Patentamt

European Patent Office

Office européen des brevets

(11) Numéro de publication: **0 399 880**
**A1**

## (12) DEMANDE DE BREVET EUROPEEN

(21) Numéro de dépôt: **90401326.5**

(22) Date de dépôt: **18.05.90**

(51) Int. Cl.5: **F01N 7/18, F16L 27/053,
F16L 55/04**

(30) Priorité: **26.05.89 FR 8906941**

(43) Date de publication de la demande:
**28.11.90 Bulletin  90/48**

(84) Etats contractants désignés:
**DE GB IT**

(71) Demandeur: **JACQUES DUBOIS**
**82 rue A. Badin**
**F-76360 Barentin(FR)**

(72) Inventeur: **Brandener, Louis**
**80 avenue F. Lefebvre**
**F-78300 Poissy(FR)**

(74) Mandataire: **Fruchard, Guy et al**
**CABINET BOETTCHER 23, rue la Boétie**
**F-75008 Paris(FR)**

(54) **Accouplement d'échappement flexible.**

(57) L'accouplement d'échappement selon l'invention comprend un premier tronçon de tube (1) auquel est fixée une première bride d'assemblage (2), un second tronçon de tube (7) auquel est associée une seconde bride d'assemblage (6), des moyens de serrage (10) disposés pour solliciter les brides d'assemblage l'une vers l'autre par l'intermédiaire de premiers organes élastiques (11), et des seconds organes élastiques (13) disposés entre les brides d'assemblage pour être comprimés entre celles-ci et exercer sur les brides une force inférieure à une force opposée exercé par les premiers organes élastiques (11).

EP 0 399 880 A1

## Accouplement d'échappement flexible

La présente invention concerne un accouplement d'échappement à rotule entre deux tronçons de tube d'échappement.

On sait que lors du montage d'une voiture, et plus particulièrement d'une voiture à moteur transversal, il est nécessaire de prévoir un accouplement flexible entre le collecteur d'échappement, fixé au moteur, et le tuyau d'échappement, fixé à la carrosserie et supportant le pot d'échappement.

Afin d'absorber les mouvements relatifs entre le collecteur et le tuyau d'échappement, et afin d'assurer l'étanchéité, l'un des tronçons de tube est terminé par une portée sphérique convexe, réalisée à l'extrémité du tube lui-même ou formée par un joint annulaire, qui coopère avec une surface complémentaire de l'autre tronçon de tube d'échappement. Afin de maintenir les pièces assemblées, le collecteur d'échappement et le tuyau d'échappement comportent dans ce cas des brides d'assemblage associées à chacun des tronçons de tube et reliées l'une à l'autre par des boulons autour desquels sont montés des ressorts d'appui afin d'assurer l'étanchéité de l'accouplement.

Lors des mouvements relatifs des deux tronçons de tube d'échappement, les deux surfaces sphériques frottent l'une contre l'autre et engendrent des vibrations extrêmement désagréables. On a déjà réussi à diminuer le niveau de ces vibrations en prévoyant un joint de structure particulière entre les extrémités en regard des tronçons de tube d'échappement. Toutefois, on n'a pas réussi à ce jour à supprimer totalement les vibrations engendrées par le frottement des différentes pièces de l'accouplement lors de l'utilisation.

La formation de vibrations ne pouvant pas être totalement supprimée, un but de l'invention est de minimiser ces vibrations.

En vue de la réalisation de ce but, on prévoit selon l'invention un accouplement d'échappement flexible comprenant un premier tronçon de tube terminé par une partie d'appui sphérique convexe, une première bride d'assemblage associée au premier tronçon de tube, un second tronçon de tube terminé par une partie d'appui sphérique concave venant en regard de la partie sphérique convexe du premier tronçon de tube, une seconde bride d'assemblage associée au second tronçon de tube, des moyens de serrage disposés pour solliciter les brides d'assemblage l'une vers l'autre par l'intermédiaire de premiers organes élastiques, dans lequel des seconds organes élastiques sont disposés entre les brides d'assemblage pour être comprimés entre celles-ci lors de la mise en place des moyens de serrage, les seconds organes élastiques exerçant sur les brides une force inférieure à une force opposée exercée sur les brides par les premiers organes élastiques.

Ainsi, tout en assurant une force de cohésion suffisante au moyen des premiers organes élastiques pour maintenir les extrémités des tronçons de tube d'échappement convenablement appliquées l'une contre l'autre même lors des vibrations du moteur, on minimise la force de frottement entre les extrémités des tronçons de tube d'échappement et on diminue ainsi les vibrations engendrées lors des oscillations de l'accouplement.

Selon un aspect avantageux de l'invention dans lequel les moyens de serrage comprennent des boulons, une partie au moins des organes élastiques comporte des manchons élastiques en tricot de fil d'acier comprimé disposés autour d'une tige des boulons. Ainsi, on obtient non seulement une réduction de la force de frottement mais également un amortissement des vibrations engendrées.

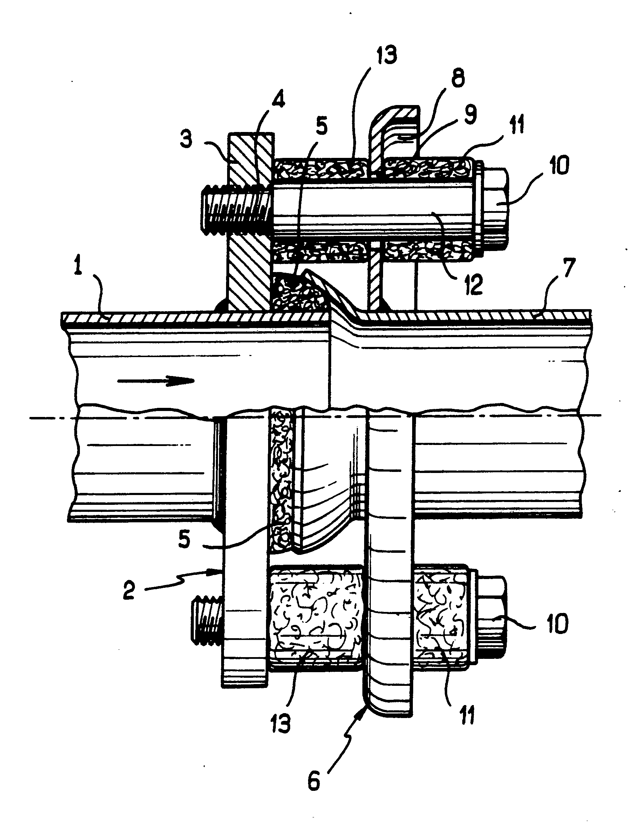

D'autres caractéristiques et avantages de l'invention apparaîtront encore à la lecture de la description qui suit d'un exemple de réalisation non limitatif de l'invention en liaison avec la figure unique ci-jointe qui représente une vue en élévation partiellement en coupe selon un plan axial du dispositif selon l'invention.

En référence à la figure, l'accouplement d'échappement flexible selon l'invention comprend un premier tronçon de tube 1 sur lequel est fixée, par exemple par soudage, une première bride d'assemblage 2 comportant, d'une façon connue en soi, des ailes 3 comportant des perçages taraudés 4. Un joint annulaire 5 est monté à l'extrémité de ce premier tronçon de tube 1 et s'appuie par une de ses faces sur la première bride d'assemblage 2. Le joint annulaire 5 comporte une surface d'appui externe sphérique convexe sur laquelle prend appui une surface d'appui sphérique concave disposée en regard de la partie d'appui sphérique convexe et réalisée à l'extrémité d'un second tronçon de tube d'échappement 7 auquel est fixée une seconde bride d'assemblage 6. La seconde bride d'assemblage 6 comporte des ailes 8 dans lesquelles sont réalisés des perçages 9.

Des moyens de serrage formés par des boulons 10 passant à travers les ouvertures 9 et vissés dans les perçages taraudés 4 sont disposés pour solliciter les brides d'assemblage 2 et 6 l'une vers l'autre par l'intermédiaire de premiers organes élastiques formés par des manchons élastiques 11 disposés autour de la tige 12 des boulons 10. Les manchons élastiques 11 sont de préférence réalisés en tricot de fil d'acier. Ils sont par exemple obtenus en réalisant un tricot tubulaire à partir d'un fil d'acier ayant un diamètre de 0,1 à 0,3 mm et une résistance à la rupture de 100 daN/mm² ou plus, puis en enroulant le tricot tubulaire mis à plat selon une préforme cylindrique qui est comprimée axialement.

De façon habituelle, les ouvertures 9 sont largement dimensionnées pour permettre une oscillation du second tronçon de tube par rapport au premier tronçon de tube. Si cela s'avère nécessaire pour éviter une pénétration des manchons élastiques 11 dans les ouvertures 9, on peut prévoir une rondelle séparatrice entre la bride d'assemblage 6 et l'extrémité du manchon élastique 11 qui est en regard.

Des seconds organes élastiques formés par des manchons élastiques 13 sont disposés autour de la tige 12 des boulons 10 entre les brides d'assemblage 2 et 6 pour être comprimés entre celles-ci lors de la mise en place des boulons de serrage 10. La longueur au repos des manchons élastiques 13 et 11 est déterminée pour qu'après serrage des boulons 10 la force exercée par les manchons élastiques 13 sur les brides d'assemblage soit inférieure à la force opposée exercée par les manchons élastiques 11 sur la bride de serrage en regard. Cette longueur est aisément déterminée en utilisant les courbes caractéristiques des manchons élastiques donnant la force de compression en fonction de la longueur des manchons. A ce propos, on notera que les manchons élastiques 13 sont de préférence réalisés de la même façon que les manchons élastiques 11 à partir d'un tricot de fil d'acier.

Afin d'exercer une force de réaction contre les brides d'assemblage, les manchons 13 ont bien entendu une longueur au repos qui est supérieure à la distance séparant les brides d'assemblage lorsque la surface externe convexe du joint annulaire 5 et la surface interne concave de l'extrémité du second tronçon de tube 7 sont simplement en contact et au repos, c'est-à-dire avec les deux tronçons de tube s'étendant coaxialement.

Lors du montage de l'accouplement, le premier tronçon de tube est équipé du joint annulaire 5 qui, selon le mode de réalisation illustré, est également réalisé à partir d'un manchon de tricot de fil d'acier comprimé axialement. Les premiers manchons élastiques 11 sont engagés sur les boulons 10 puis les boulons 10 sont engagés à travers les ouvertures 9 de la bride d'assemblage 6 et les seconds manchons élastiques 13 sont montés sur les boulons 10. Les deux tronçons de tube d'assemblage sont disposés l'un en face de l'autre et les boulons 10 sont vissés dans les perçages taraudés 4. Au début de ce mouvement, l'extrémité concave du second tronçon de tube 7 n'est pas encore en contact avec la surface convexe du joint annulaire 5 et la compression sur les manchons élastiques 11 et 13 est donc équilibrée. Dès que l'extrémité concave du second tronçon de tube 7 entre en contact avec le joint annulaire 5, la force exercée par les manchons élastiques 11 est compensée par la somme des forces exercées par les manchons élastiques 13 et le joint annulaire 5. A titre d'exemple, un accouplement selon l'invention a été réalisé en exerçant une force de compression de 60 kg sur chacun des manchons élastiques 11 et en choisissant des manchons élastiques 13 d'une longueur appropriée pourqu'une force de réaction de 40 kg soit exercée par chacun des manchons élastiques 13. La force d'appui du second tronçon de tube d'échappement sur le joint annulaire 5 était donc de 40 kg seulement alors qu'elle aurait été de 120 kg en l'absence des seconds manchons élastiques 13. Des essais effectués au banc ont montré que les vibrations engendrées étaient totalement inexistantes dans la gamme des fréquences audibles.

Par ailleurs, il a été constaté que l'étanchéité de l'accouplement était maintenue. En effet, lorsque les vibrations ayant comme origine le moteur ou les réactions du véhicule sur la route tendent à écarter les deux tronçons l'un de l'autre, le taux de compression des premiers manchons élastiques 11 augmente tandis que le taux de compression des seconds manchons élastiques 13 diminue. Cette variation des taux de compression qui entraîne une variation correspondante des forces appliquées tend donc à ramener les deux tronçons de tube d'échappement en contact l'un avec l'autre.

Bien entendu l'invention n'est pas limitée au mode de réalisation décrit et on peut y apporter des variantes de réalisation sans sortir du cadre de l'invention. En particulier, bien que l'invention ait été décrite avec des premiers organes élastiques 11 et des seconds organes élastiques 13 formés par des manchons élastiques en tricot métallique comprimé, on peut sans sortir du cadre de l'invention remplacer certains d'entre eux ou même la totalité de ces organes élastiques par d'autres organes élastiques tels que des ressorts.

De même, bien que l'invention ait été décrite en liaison avec un accouplement dont le premier tronçon de tube est terminé par une partie d'appui sphérique convexe formée par un joint annulaire en tricot métallique comprimé, l'accouplement selon l'invention peut également être réalisé en prévoyant une partie convexe rigide sur laquelle la partie concave du second tronçon de tube s'appuie de façon élastique par suite de l'élasticité du métal constituant le second tronçon de tube.

On peut également réaliser l'accouplement selon l'invention en prévoyant une extrémité du premier tronçon de tube en forme d'anneau sphérique convexe en une seule pièce avec ce tronçon et un joint annulaire élastique à surface concave porté par le second tronçon de tube.

Bien que l'invention ait été décrite avec des manchons élastiques 13 entourant les tiges 12 des boulons 10, les seconds organes élastiques peuvent être montés en un point quelconque entre les brides d'assemblage pour exercer une force s'opposant à la force exercée par les premiers moyens élastiques et diminuant donc la force de frottement au niveau des parties d'accouplement sphériques.

## Revendications

1. Accouplement d'échappement flexible comprenant un premier tronçon de tube (1) terminé par une partie d'appui sphérique convexe, une première bride d'assemblage (2) associée au premier tronçon de tube, un second tronçon de tube (7) terminé par une partie d'appui sphérique concave venant en regard de la partie sphérique convexe du premier tronçon de tube, une seconde bride d'assemblage (6) associée au second tronçon de tube, et des moyens de serrage (10) disposés pour solliciter les brides d'assemblage l'une vers l'autre par l'intermédiaire de premiers organes élastiques (11), caractérisé en ce qu'il comporte des seconds organes élastiques (13) disposés entre les brides d'assemblage pour être comprimés entre celles-ci lors de la mise en place des moyens de serrage, les seconds organes élastiques (13) exerçant sur les brides une force inférieure à une force opposée exercée sur les brides par les premiers organes élastiques (11).

2. Accouplement d'échappement selon la revendication 1 dans lequel les moyens de serrage comprennent des boulons (10) caractérisé en ce qu'une partie au moins des organes élastiques comporte des manchons élastiques (11, 13) en tricot de fil d'acier comprimé disposés autour d'une tige (12) des boulons (10).

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | DE-A-2829333 (METEX)<br>* figure 2 *<br>--- | 1 | F01N7/18<br>F16L27/053<br>F16L55/04 |
| A | DE-C-3317512 (BERGWERKSVERBAND)<br>* abrégé; figure 1 *<br>--- | 1, 2 | |
| A | FR-A-2509005 (FIAT)<br>* figure 1 *<br>--- | 1 | |
| A | EP-A-197287 (GOETZE)<br>* figure 1 *<br>--- | 1 | |
| A | PATENT ABSTRACTS OF JAPAN<br>vol. 8, no. 258 (M-340)(1695) 27 novembre 1984,<br>& JP-A-59 131722 (MAZDA) 28 juillet 1984,<br>* le document en entier *<br>--- | 1 | |
| A,P | EP-A-337854 (DUBOIS)<br>* le document en entier *<br>--- | 1, 2 | |
| A | DE-A-2838990 (METALLSCHLAUCH-FABRIK PFORZHEIM)<br>--- | | DOMAINES TECHNIQUES RECHERCHES (Int. Cl.5 ) |
| A | GB-A-229805 (WALTER SLINGSBY)<br>--- | | F01N<br>F16L |
| A | GB-A-2107815 (ELF)<br>----- | | |

Le présent rapport a été établi pour toutes les revendications

| Lieu de la recherche | Date d'achèvement de la recherche | Examinateur |
|---|---|---|
| LA HAYE | 14 AOUT 1990 | ERNST J.L. |